# EUROPÄISCHE PATENTSCHRIFT

(11) **EP 3 922 526 B1**
(45) Veröffentlichungstag und Bekanntmachung des Hinweises auf die Patenterteilung: **20.09.2023**
(21) Anmeldenummer: 20178972.4
(22) Anmeldetag: 09.06.2020
(51) Int. Cl.: B60W 40/11, B60W 40/112, G06T 7/13, G06T 7/73, G06V 20/56

(54) **BESTIMMUNG EINES ROLLWINKELS ODER EINES NICKWINKELS EINES FORTBEWEGUNGSMITTELS**
DETERMINATION OF A ROLL ANGLE OR PITCH ANGLE OF A MODE OF TRANSPORT
DÉTERMINATION D'UN ANGLE DE ROTATION OU D'UN ANGLE DE TANGAGE D'UN MOYEN DE DÉPLACEMENT

(43) Veröffentlichungstag der Anmeldung: 15.12.2021
(73) Patentinhaber: Elektrobit Automotive GmbH, 91058 Erlangen (DE)
(72) Erfinder: Patino Studencki, Lucila, 65824 Schwalbach a. Ts. (DE); Kraus, Manuel, 65824 Schwalbach a. Ts. (DE); Pfeuffer, Christian, 65824 Schwalbach a. Ts. (DE); Siller, Christian, 65824 Schwalbach a. Ts. (DE); Schauer, Martin, 65824 Schwalbach a. Ts. (DE); Nippe, Martin, 65824 Schwalbach a. Ts. (DE); Baleghkalam, Ghazaleh, 65824 Schwalbach a. Ts. (DE); Ohl, Sebastian, 65824 Schwalbach a. Ts. (DE)
(74) Vertreter: Continental Corporation

(56) Entgegenhaltungen:
- EP-A1- 2 246 664
- EP-A1- 3 375 682
- DE-A1-102014 007 900
- DE-A1-102014 218 075

## Beschreibung

Die vorliegende Erfindung betrifft ein Verfahren, ein Computerprogramm mit Instruktionen und eine Vorrichtung zum Bestimmen eines Rollwinkels oder eines Nickwinkels eines Fortbewegungsmittels, insbesondere eines Kraftfahrzeugs.

Für eine Vielzahl von Anwendungen in modernen Fortbewegungsmitteln, beispielsweise für Assistenzsysteme, ist eine Schätzung der Orientierung bzw. Pose des Fortbewegungsmittels erforderlich. Insbesondere sind dabei der Rollwinkel und der Nickwinkel von Interesse. Diese können unter Verwendung von interozeptiven Sensoren, z.B. Beschleunigungssensoren und Drehratensensoren, bestimmt werden, die in der Regel in jedem Fortbewegungsmittel verfügbar sind. Dabei sind der Rollwinkel und der Nickwinkel des Fortbewegungsmittels nicht direkt aus den Daten dieser Sensoren beobachtbar, sondern nur über indirekte Messungen des Gravitationsvektors auf dem Beschleunigungssensor oder durch Integration von Drehratenmessungen ermittelbar. Allerdings leiden die genannten Sensoren unter einer Drift, weshalb die Schätzung der Lage des Fortbewegungsmittels nicht immer eindeutig ist.

Vor diesem Hintergrund beschreibt WO 2017/129199 A1 ein Verfahren zum Bestimmen eines Kippzustands eines Fahrzeugs bezogen auf eine Fahrbahnoberfläche basierend auf einem einen Modellparameter umfassenden Kippmodell. Bei dem Verfahren wird ein erster Wert einer Fahrzustandsgröße anhand einer an dem Fahrzeug angebrachten Inertialsensorik gemessen. Basierend auf dem ersten Messwert wird ein relativ zur Fahrbahnoberfläche definierter Kippwinkel des Fahrzeugs ermittelt. Basierend auf dem ermittelten Kippwinkel und dem ersten Messwert wird der Modellparameter des Kippmodells abgeglichen. Basierend auf dem ersten Messwert der Fahrzustandsgröße oder einem zweiten anhand der Inertialsensorik gemessenen Messwert der Fahrzustandsgröße wird schließlich der Kippzustand des Fahrzeugs mittels des Kippmodells bestimmt.

EP 2 302 407 B1 beschreibt ein Verfahren zum Berechnen eines Neigungswinkels eines Fahrzeugs, während es entlang einer Trajektorie fährt, im Verhältnis zu einem lokalen Schwerkraftvektor. Das Fahrzeug umfasst dazu eine Streckenmesseinheit und eine Trägheitsmesseinheit. Das Berechnen des Neigungswinkels basiert auf Messungen, die sowohl von der Streckenmesseinheit als auch von der Trägheitsmesseinheit vorgenommen werden.

Ein alternativer Ansatz für die Durchführung von Lagemessungen nutzt mehrere GNSS-Antennen (GNSS: Global Navigation Satellite System; Globales Navigationssatellitensystem). Allerdings hängt die Genauigkeit dieses Ansatzes sehr stark von der Umgebung ab, da GNSS-Messungen in urbanen Umgebungen an Qualitätsverlusten aufgrund von Signalreflexionen leiden. Zudem sind die Kosten der Antennen erheblich.

Ein weiterer Ansatz nutzt Höhenstandssensoren des Fahrwerks eines Kraftfahrzeugs, die den Höhenstand jeder einzelnen Radaufhängung messen. Diese Sensoren weisen aber normalerweise keine ausreichende Genauigkeit auf, um eine gute Roll- oder Nickwinkelschätzung durchzuführen.

Weitere Ansätze verwenden Beobachtungen der Umgebung des Fortbewegungsmittels zur Lagebestimmung. Beispielsweise beschreibt EP 2 875 317 B1 ein Verfahren zur Bestimmung einer näherungsweisen absoluten Drei-Achsen-Ausrichtung einer Plattform. Bei dem Verfahren werden mittels eines auf der Plattform angeordneten Himmelspolarisationssensors zu verschiedenen Zeitpunkten Himmelspolarisations-Datensätze bestimmt. Aus einer Differenz der Himmelspolarisations-Datensätze kann eine näherungsweise absolute Drei-Achsen-Ausrichtung der Plattform berechnet werden.

Der Artikel "Roll and Pitch Estimation Using Visual Horizon Recognition" von S. Del Pizzo et al. [1] beschreibt die Bestimmung des Rollwinkels und des Nickwinkels eines Schiffes oder Segelbootes durch eine visuelle Erkennung des Horizonts. Der beschriebene Ansatz funktioniert nur dann zuverlässig, wenn der Horizont eindeutig bestimmbar ist. Er ist daher für Landfahrzeuge in der Regel nicht nutzbar.

Aus EP 3 375 682 A1 ist ein Verfahren zum Bestimmen eines Rollwinkels eines Fortbewegungsmittels bekannt, mit den Schritten:
- Erfassen von Umgebungsinformationen für eine Umgebung des Fortbewegungsm ittels;
- Bestimmen von Kanten von künstlichen Bauwerken in den Umgebungsinformationen; und
- Ermitteln des Rollwinkels des Fortbewegungsmittels anhand der Kanten.

Aus DE 10 2014 218 075 A1 ist eine Wankwinkel-Schätzeinrichtung eines Fahrzeugs bekannt.

Es ist eine Aufgabe der vorliegenden Erfindung, alternative Lösungen für eine Bestimmung eines Rollwinkels oder eines Nickwinkels eines Fortbewegungsmittels bereitzustellen.

Diese Aufgabe wird durch ein Verfahren mit den Merkmalen des Anspruchs 1, durch ein Computerprogramm mit Instruktionen mit den Merkmalen des Anspruchs 5 und durch eine Vorrichtung mit den Merkmalen des Anspruchs 6 gelöst. Bevorzugte Ausgestaltungen der Erfindung sind Gegenstand der abhängigen Ansprüche.

Gemäß einem ersten Aspekt der Erfindung umfasst ein Verfahren zum Bestimmen eines Rollwinkels oder eines Nickwinkels eines Fortbewegungsmittels die Schritte:
- Erfassen von Umgebungsinformationen für eine Umgebung des Fortbewegungsm ittels;
- Bestimmen von Kanten von künstlichen Bauwerken in den Umgebungsinformationen; und
- Ermitteln des Rollwinkels oder des Nickwinkels des Fortbewegungsmittels anhand der Kanten, wobei eine Ausrichtung der Kanten der künstlichen Bauwerke aus einer Datenbank mit Kantendaten ermittelt wird.

Gemäß einem weiteren Aspekt der Erfindung umfasst ein Computerprogramm Instruktionen, die bei Ausführung durch einen Computer den Computer zur Ausführung der folgenden Schritte zum Bestimmen eines Rollwinkels oder eines Nickwinkels eines Fortbewegungsmittels veranlassen:
- Erfassen von Umgebungsinformationen für eine Umgebung des Fortbewegungsm ittels;
- Bestimmen von Kanten von künstlichen Bauwerken in den Umgebungsinformationen; und
- Ermitteln des Rollwinkels oder des Nickwinkels des Fortbewegungsmittels anhand der Kanten, wobei eine Ausrichtung der Kanten der künstlichen Bauwerke aus einer Datenbank mit Kantendaten ermittelt wird.

Der Begriff Computer ist dabei breit zu verstehen. Insbesondere umfasst er auch Steuergeräte, Controller, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Bestimmen eines Rollwinkels oder eines Nickwinkels eines Fortbewegungsmittels auf:
- ein Erfassungsmodul zum Erfassen von Umgebungsinformationen für eine Umgebung des Fortbewegungsmittels;
- eine Datenbank (50) mit Kantendaten (KD);
- einen Kantendetektor zum Bestimmen von Kanten von künstlichen Bauwerken in den Umgebungsinformationen und zum Ermitteln einer Ausrichtung der Kanten der künstlichen Bauwerke aus den Kantendaten der Datenbank; und
- ein Auswertemodul zum Ermitteln des Rollwinkels oder des Nickwinkels des Fortbewegungsmittels anhand der Kanten.

Bei der erfindungsgemäßen Lösung bestimmt ein mit einer Umgebungssensorik ausgestattetes Fortbewegungsmittel aus Bauwerken und Gebäudestrukturen Informationen, die zur Bestimmung der eigenen Lage dienen. Zu diesem Zweck werden mit einem Kantendetektor Kanten der Bauwerke und Gebäudestrukturen bestimmt, die in einer bekannten Ausrichtung stehen. Dabei wird eine Ausrichtung der Kanten der künstlichen Bauwerke aus einer Datenbank mit Kantendaten ermittelt. Beispielsweise wird die exakte Ausrichtung der Kanten durch das Fortbewegungsmittel auch aus einer Datenbank mit Kantendaten abgerufen werden. Dies ist besonders vorteilhaft, falls die Kanten oder zumindest einzelne Kanten eines Bauwerks nicht horizontal oder vertikal verlaufen. Durch eine Auswertung der Kanten kann dann der Rollwinkel und/oder der Nickwinkel des Fortbewegungsmittels bestimmt werden. Die erfindungsgemäße Lösung erlaubt genauere Schätzungen von Rollwinkel und Nickwinkel, da eine absolute Winkelmessung durchgeführt werden kann. Die erreichbare Genauigkeit hängt dabei hauptsächlich von der Qualität der Daten der Umgebungssensorik sowie der Kalibrierung der Umgebungssensorik ab. Die beschriebene Lösung ist bevorzugt anwendbar in urbanen Umgebungen.

Gemäß einem Aspekt der Erfindung wird der Rollwinkel anhand des Verlaufs einer einzelnen Kante ermittelt. Bei einer bekannten Ausrichtung der Kante kann der Rollwinkel des Fortbewegungsmittels aus der Abweichung zwischen der Ausrichtung der in den kalibrierten Umgebungsinformationen detektierten Kante und der bekannten Ausrichtung der Kante bestimmt werden. Dies ist besonders einfach, wenn die Kante des Bauwerks senkrecht verläuft.

Gemäß einem Aspekt der Erfindung werden die Umgebungsinformationen mit einer Kamera oder einem Sensor für die Umgebungsabtastung erfasst. Bei dem Sensor für die Umgebungsabtastung kann es sich beispielsweise um einen Lidarsensor oder einen Laserscanner handeln. Alle diese Typen von Sensoren erlauben es, geeignete Umgebungsinformationen zu erfassen, auf die Algorithmen zur Kantenerkennung angewendet werden können. Zudem sind diese Sensoren oftmals ohnehin für andere Anwendungen in Fortbewegungsmitteln vorhanden, sodass keine zusätzliche Sensorik verbaut werden muss.

Vorzugsweise wird ein erfindungsgemäßes Verfahren oder eine erfindungsgemäße Vorrichtung in einem Fortbewegungsmittel eingesetzt, z.B. in einem Kraftfahrzeug. Bei dem Kraftfahrzeug kann es sich z.B. um einen Personenkraftwagen, ein Nutzfahrzeug oder ein Zweirad handeln. Die erfindungsgemäße Lösung kann dabei insbesondere genutzt werden, um Eingangsdaten für Fahrerassistenzsysteme bereitzustellen.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Bestimmen eines Rollwinkels oder eines Nickwinkels eines Fortbewegungsmittels;
- Fig. 2: zeigt schematisch eine erste Ausführungsform einer Vorrichtung zum Bestimmen eines Rollwinkels oder eines Nickwinkels eines Fortbewegungsmittels;
- Fig. 3: zeigt schematisch eine zweite Ausführungsform einer Vorrichtung zum Bestimmen eines Rollwinkels oder eines Nickwinkels eines Fortbewegungsmittels;
- Fig. 4: zeigt schematisch ein Fortbewegungsmittel, in dem eine erfindungsgemäße Lösung realisiert ist;
- Fig. 5: veranschaulicht die Bestimmung eines Rollwinkels eines Fortbewegungsmittels aus Kamerabildern eines Bauwerks; und
- Fig. 6: zeigt schematisch ein Systemdiagramm einer Umsetzung einer erfindungsgemäßen Lösung.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

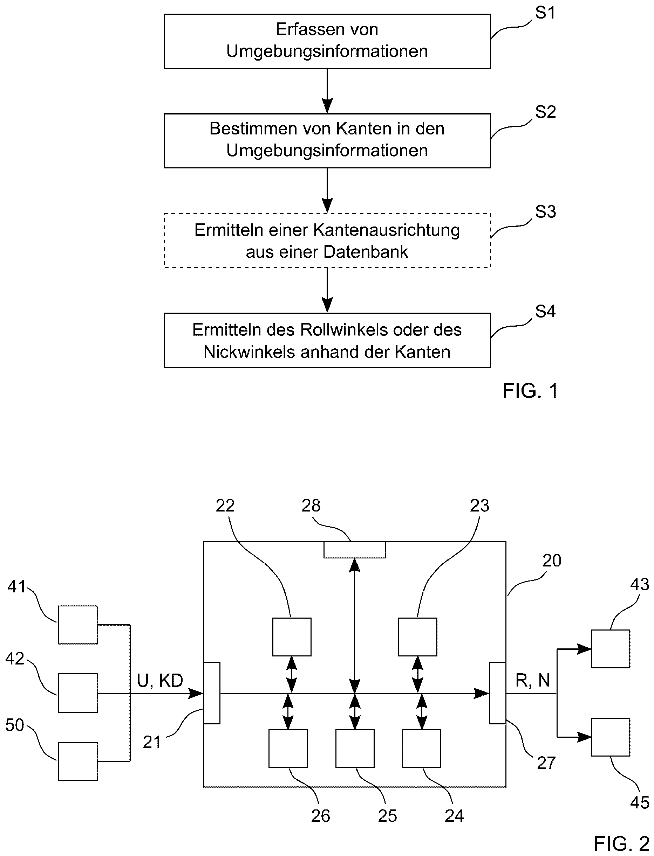

Fig. 1 zeigt schematisch ein Verfahren zum Bestimmen eines Rollwinkels oder eines Nickwinkels eines Fortbewegungsmittels. In einem ersten Schritt werden Umgebungsinformationen für eine Umgebung des Fortbewegungsmittels erfasst S1, beispielsweise mit einer Kamera oder einem Sensor für die Umgebungsabtastung, z.B. einem Lidarsensor oder einem Laserscanner. In den Umgebungsinformationen werden dann Kanten von künstlichen Bauwerken bestimmt S2. Eine Ausrichtung der Kanten der künstlichen Bauwerke wird aus einer Datenbank mit Kantendaten ermittelt S3. Anhand der Kanten wird schließlich der Rollwinkel oder der Nickwinkel des Fortbewegungsmittels ermittelt S4. Beispielsweise kann der Rollwinkel anhand des Verlaufs einer einzelnen Kante und der Nickwinkel anhand eines relativen Verlaufs von zwei Kanten ermittelt werden S4. Der ermittelte Rollwinkel oder der Nickwinkel kann z.B. als Messgröße an einen Schätzalgorithmus übergeben werden.

Fig. 2 zeigt eine vereinfachte schematische Darstellung einer ersten Ausführungsform einer Vorrichtung 20 zum Bestimmen eines Rollwinkels oder eines Nickwinkels eines Fortbewegungsmittels. Die Vorrichtung 20 hat einen Eingang 21, über den ein Erfassungsmodul 22 Umgebungsinformationen U für eine Umgebung des Fortbewegungsmittels erfassen kann, indem es beispielsweise Daten einer Kamera 41 oder eines Sensors 42 für die Umgebungsabtastung, z.B. eines Lidarsensors oder eines Laserscanners, empfängt. Ein Kantendetektor 23 bestimmt Kanten von künstlichen Bauwerken in den Umgebungsinformationen U. Alternativ können die Kanten auch im Rahmen einer Vorverarbeitung außerhalb der Vorrichtung 20 aus den Umgebungsinformationen U bestimmt werden. Ein Auswertemodul 24 ermittelt dann den Rollwinkel R oder den Nickwinkel N des Fortbewegungsmittels anhand der Kanten. Beispielsweise kann der Rollwinkel R anhand des Verlaufs einer einzelnen Kante und der Nickwinkel N anhand eines relativen Verlaufs von zwei Kanten ermittelt werden. Für das Ermitteln der Winkel R, N ruft das Auswertemodul 24 z.B. eine Ausrichtung der Kanten der künstlichen Bauwerke aus einer Datenbank 50 mit Kantendaten KD ab. Die vom Auswertemodul 24 ermittelten Winkel R, N können über einen Ausgang 27 der Vorrichtung 20 ausgegeben werden, z.B. zur Verwendung durch einen Posenschätzer 43 oder ein Assistenzsystem 45.

Das Erfassungsmodul 22, der Kantendetektor 23 und das Auswertemodul 24 können von einem Kontrollmodul 25 gesteuert werden. Über eine Benutzerschnittstelle 28 können gegebenenfalls Einstellungen des Erfassungsmoduls 22, des Kantendetektors 23, des Auswertemoduls 24 oder des Kontrollmoduls 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Das Erfassungsmodul 22, der Kantendetektor 23, das Auswertemodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte Schnittstelle implementiert sein. Das Abrufen der Kantendaten KD aus der Datenbank 50 kann zudem alternativ auch über eine separate Schnittstelle erfolgen.

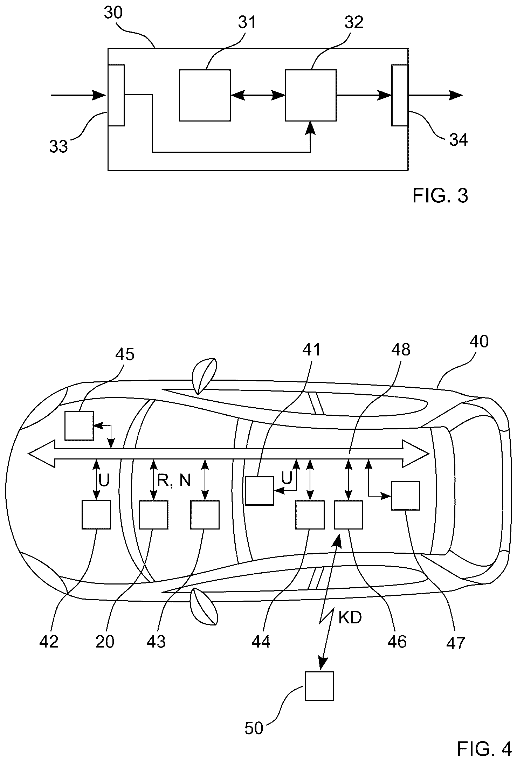

Fig. 3 zeigt eine vereinfachte schematische Darstellung einer zweiten Ausführungsform einer Vorrichtung 30 zum Bestimmen eines Rollwinkels oder eines Nickwinkels eines Fortbewegungsmittels. Die Vorrichtung 30 weist einen Prozessor 32 und einen Speicher 31 auf. Beispielsweise handelt es sich bei der Vorrichtung 30 um einen Controller oder ein eingebettetes System. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, z.B. von Umgebungsinformationen oder von Kantendaten. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Fortbewegungsmittel 40, in dem eine erfindungsgemäße Lösung realisiert ist. Bei dem Fortbewegungsmittel 40 handelt es sich in diesem Beispiel um ein Kraftfahrzeug. Das Kraftfahrzeug weist eine erfindungsgemäße Vorrichtung 20 zum Bestimmen eines Rollwinkels R oder eines Nickwinkels N des Kraftfahrzeugs auf. Die Vorrichtung 20 nutzt von einer Kamera 41 oder von einem Sensor 42 für die Umgebungsabtastung erfasste Umgebungsinformationen U. Das Kraftfahrzeug weist zudem einen Posenschätzer 43 auf, der die von der Vorrichtung 20 bestimmten Winkel R, N als Eingangsgrößen für eine verbesserte Posenschätzung nutzt. Weitere Bestandteile des Kraftfahrzeugs sind in diesem Beispiel ein Navigationssystem 44, das einen Bediener des Kraftfahrzeugs mittels einer Routenführung unterstützen kann, ein Assistenzsystem 45, das ebenfalls die von der Vorrichtung 20 bestimmten Winkel R, N nutzen kann, sowie eine Datenübertragungseinheit 46. Die Vorrichtung 20 kann natürlich auch in den Posenschätzer 43 oder das Assistenzsystem 45 integriert sein. Mittels der Datenübertragungseinheit 46 kann eine Verbindung zu einer Datenbank 50 aufgebaut werden, z.B. um Kantendaten KD für die Winkelbestimmung zu beziehen. Zur Speicherung von Daten ist ein Speicher 47 vorhanden. Der Datenaustausch zwischen den verschiedenen Komponenten des Kraftfahrzeugs erfolgt über ein Netzwerk 48.

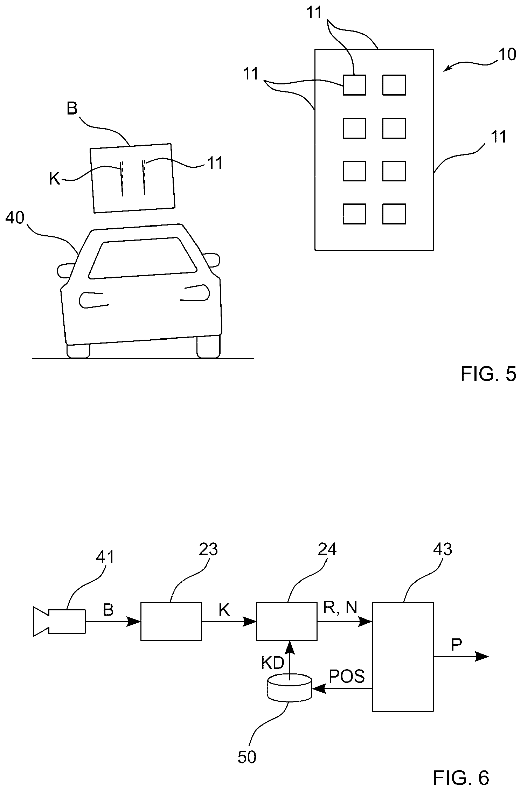

Fig. 5 veranschaulicht die Bestimmung eines Rollwinkels eines Fortbewegungsmittels 40 aus Kamerabildern B eines Bauwerks 10. Bei dem Fortbewegungsmittel 40 handelt es sich in diesem Beispiel um ein Kraftfahrzeug. Das Bauwerk weist eine Reihe von Kanten 11 auf. Dies sind einerseits die äußeren Kanten 11, die durch die Form der Gebäudehülle bestimmt sind, andererseits aber auch Kanten 11, die aus den Begrenzungen von Fenstern, Türen, Balkonen, Vordächern, etc. resultieren. Das Kraftfahrzeug ist mit einer oder mehreren Kameras ausgestattet, nimmt Bilder B von seiner Umgebung auf und bestimmt Kanten K von Bauwerken 10 in diesen Bildern B. Durch geometrische Beziehungen zwischen der bekannten Ausrichtung des Gebäudes 10 bzw. seiner Kanten 11 und den aus den Bildern 10 bestimmten Kanten K wird die Pose des Kraftfahrzeugs bestimmt.

Fig. 6 zeigt schematisch ein Systemdiagramm einer Umsetzung einer erfindungsgemäßen Lösung. In den von einer Kamera 41 eines Fortbewegungsmittels aufgenommenen Kamerabildern B werden durch einen Kantendetektor 23 Kanten K detektiert. Der Kantendetektor 23 kann dazu Bildverarbeitungstechniken wie z.B. einen Canny-Algorithmus nutzen. Auf Basis der Position POS des Fortbewegungsmittels werden aus einer dafür vorgesehenen Datenbank 50 Informationen KD über die Ausrichtung eines bestimmten Gebäudes bzw. seiner Kanten extrahiert. Anhand geometrischer Beziehungen zwischen der bekannten Ausrichtung der Kanten und den aus dem Kamerabild B bestimmten Kanten K werden durch ein Auswertemodul 24 Rollwinkel R und Nickwinkel N des Fortbewegungsmittels bestimmt. Diese Informationen können als Messung von einem Schätzalgorithmus eines Posenschätzers 43 verwendet werden, um zusammen mit den Daten anderer Sensoren, wie z.B. Beschleunigungs- und Drehratensensoren, eine genauere Schätzung der Pose P des Fortbewegungsmittels durchzuführen. Stehen in einem einfachen Fall die Kanten des Gebäudes parallel zum Gravitationsvektor, entspricht die Abweichung zwischen den Kanten K aus dem kalibrierten Bild und der bekannten Senkrechtausrichtung dem Rollwinkel R des Fortbewegungsmittels. In ähnlicher Weise kann anhand des Winkels zwischen zwei detektierten Kanten K eines Gebäudes der Nickwinkel bestimmt werden. Dies ist besonders einfach, wenn die beiden Kanten des Gebäudes parallel senkrecht verlaufen.

### Referenzen

[1] S. Del Pizzo et al.: "Roll and Pitch Estimation Using Visual Horizon Recognition". In: L. De Paolis, A. Mongelli (eds) Augmented and Virtual Reality. AVR 2014. Lecture Notes in Computer Science, Vol. 8853, pp. 363-380.

## Patentansprüche

1. Verfahren zum Bestimmen eines Rollwinkels (R) oder eines Nickwinkels (N) eines Fortbewegungsmittels (40), mit den Schritten:
- Erfassen (S1) von Umgebungsinformationen (U) für eine Umgebung des Fortbewegungsmittels (40);
- Bestimmen (S2) von Kanten (K) von künstlichen Bauwerken (10) in den Umgebungsinformationen (U); und
- Ermitteln (S4) des Rollwinkels (R) oder des Nickwinkels (N) des Fortbewegungsmittels (40) anhand der Kanten (K), **dadurch gekennzeichnet, dass** eine Ausrichtung der Kanten (K) der künstlichen Bauwerke (10) aus einer Datenbank (50) mit Kantendaten (KD) ermittelt wird (S3).

2. Verfahren gemäß Anspruch 1, wobei der Rollwinkel (R) anhand des Verlaufs einer einzelnen Kante (K) ermittelt wird (S4).

3. Verfahren gemäß einem der vorherigen Ansprüche, wobei die Umgebungsinformationen (U) mit einer Kamera (41) oder einem Sensor (42) für die Umgebungsabtastung erfasst werden (S1).

4. Verfahren gemäß Anspruch 3, wobei der Sensor (42) für die Umgebungsabtastung ein Lidarsensor oder ein Laserscanner ist.

5. Computerprogramm mit Instruktionen, die bei Ausführung durch einen Computer den Computer zur Ausführung der Schritte eines Verfahrens gemäß einem der Ansprüche 1 bis 4 zum Bestimmen eines Rollwinkels (R) oder eines Nickwinkels (N) eines Fortbewegungsmittels (40) veranlassen.

6. Vorrichtung (20) zum Bestimmen eines Rollwinkels (R) oder eines Nickwinkels (N) eines Fortbewegungsmittels (40), mit:
- einem Erfassungsmodul (22) zum Erfassen (S1) von Umgebungsinformationen (U) für eine Umgebung des Fortbewegungsmittels (40);
- einer Datenbank (50);
- einem Kantendetektor (23) zum Bestimmen (S2) von Kanten (K) von künstlichen Bauwerken (10) in den Umgebungsinformationen (U) und zum Ermitteln (S3) einer Ausrichtung der Kanten (K) der künstlichen Bauwerke (10); und
- einem Auswertemodul (24) zum Ermitteln (S4) des Rollwinkels (R) oder des Nickwinkels (N) des Fortbewegungsmittels (40) anhand der Kanten (K), **dadurch gekennzeichnet, dass** die Ausrichtung der Kanten (K) der künstlichen Bauwerke (10) aus Kantendaten (KD) in der Datenbank (50) ermittelt wird.

## Claims

1. Method for the determination of a roll angle (R) or a pitch angle (N) of a means of transport (40), comprising the steps:
- acquiring (S1) surroundings information (U) for the surroundings of the means of transport (40);
- determining (S2) edges (K) of artificial structures (10) in the surroundings information (U); and
- determining (S4) the roll angle (R) or the pitch angle (N) of the means of transport (40) by using the edges (K),
**characterized in that** an alignment of the edges (K) of the artificial structures (10) is determined (S3) from a database (50) having edge data (KD).

2. Method according to Claim 1, wherein the roll angle (R) is determined (S4) by using the course of an individual edge (K).

3. Method according to one of the preceding claims, wherein the surroundings information (U) is acquired (S1) by using a camera (41) or a sensor (42) for scanning the surroundings.

4. Method according to Claim 3, wherein the sensor (42) for scanning the surroundings is a lidar sensor or a laser scanner.

5. Computer program having instructions which, when executed by a computer, cause the computer to carry out the steps of the method according to one of Claims 1 to 4 for determining a roll angle (R) or a pitch angle (N) of a means of transport (40).

6. Device (20) for determining a roll angle (R) or a pitch angle (N) of a means of transport (40), comprising:
- an acquisition module (22) for acquiring (S1) surroundings information (U) for the surroundings of the means of transport (40);
- a database (50);
- an edge detector (23) for determining (S2) edges (K) of artificial structures (10) in the surroundings information (U) and for determining (S3) an alignment of the edges (K) of the artificial structures (10); and
- an evaluation module (24) for determining (S4) the roll angle (R) or the pitch angle (N) of the means of transport (40) by using the edges (K),
**characterized in that** the alignment of the edges (K) of the artificial structures (10) is determined from edge data (KD) in the database (50).

## Revendications

1. Procédé permettant de déterminer un angle de roulis (R) ou un angle de tangage (N) d'un moyen de transport (40), comprenant les étapes consistant à :
- acquérir (51) des informations d'environnement (U) pour un environnement du moyen de transport (40) ;
- déterminer (S2) des contours (K) de constructions artificielles (10) dans les informations d'environnement (U) ; et
- établir (S4) l'angle de roulis (R) ou l'angle de tangage (N) du moyen de transport (40) à l'aide des contours (K),
**caractérisé en ce qu'**une orientation des contours (K) des constructions artificielles (10) est établie (S3) à partir d'une base de données (50) contenant des données de contour (KD).

2. Procédé selon la revendication 1, dans lequel l'angle de roulis (R) est établi (S4) à l'aide de l'allure d'un seul contour (K).

3. Procédé selon l'une quelconque des revendications précédentes, dans lequel les informations d'environnement (U) sont acquises (S1) à l'aide d'une caméra (41) ou d'un capteur (42) pour le balayage d'environnement.

4. Procédé selon la revendication 3, dans lequel le capteur (42) pour le balayage d'environnement est un capteur lidar ou un scanner laser.

5. Programme informatique comprenant des instructions qui, lorsqu'elles sont exécutées par un ordinateur, font que l'ordinateur exécute les étapes d'un procédé selon l'une quelconque des revendications 1 à 4 pour déterminer un angle de roulis (R) ou un angle de tangage (N) d'un moyen de transport (40).

6. Dispositif (20) permettant de déterminer un angle de roulis (R) ou un angle de tangage (N) d'un moyen de transport (40), comprenant :
- un module d'acquisition (22) pour acquérir (51) des informations d'environnement (U) pour un environnement du moyen de transport (40) ;
- une base de données (50) ;
- un détecteur de contours (23) pour déterminer (S2) des contours (K) de constructions artificielles (10) dans les informations d'environnement (U) et pour établir (S3) une orientation des contours (K) des constructions artificielles (10) ; et
- un module d'évaluation (24) pour établir (S4) l'angle de roulis (R) ou l'angle de tangage (N) du moyen de transport (40) à l'aide des contours (K),
**caractérisé en ce que** l'orientation des contours (K) des constructions artificielles (10) est établie à partir de données de contour (KD) dans la base de données (50).
